# FASCICULE DE BREVET EUROPEEN

(11) **EP 1 164 675 B1**
(45) Date de publication et mention de la délivrance du brevet: **25.08.2010**
(21) Numéro de dépôt: 01401371.8
(22) Date de dépôt: 23.05.2001
(51) Int. Cl.: H02G 3/06

(54) **Accessoire de dérivation positionné à la jonction de deux goulottes**
Abzweigungszubehör zur Positionierung zwischen zwei Kabelrinnen
Derivation accessory positionned at the junction of two cable channels

(30) Priorité: 15.06.2000 FR 0007633
(43) Date de publication de la demande: 19.12.2001
(73) Titulaire: Legrand France, 87000 Limoges (FR); Legrand SNC, 87000 Limoges (FR)
(72) Inventeur: Bellanger, Jérôme, 72000 Le Mans (FR)
(74) Mandataire: Santarelli

(56) Documents cités:
- EP-A- 0 776 078
- FR-A- 2 786 946

## Description

La présente invention concerne un accessoire de dérivation apte à établir la jonction entre deux goulottes, la première étant fixée sur un support vertical et la deuxième reposant sur un support horizontal.

La première goulotte peut être une moulure ou une plinthe, et la deuxième goulotte est généralement un passage de plancher. Cependant, cette deuxième goulotte peut être également fixée au plafond.

On connaît déjà un tel accessoire de dérivation qui comprend une plaque de fermeture de la première goulotte, pourvue à sa base d'une ouverture de communication entre les espaces intérieurs desdites goulottes, et, à partir de cette ouverture, un auvent, s'étendant horizontalement, apte à recouvrir localement le couvercle de fermeture de la deuxième goulotte.

L'inconvénient principal d'un tel accessoire de dérivation est que l'ouverture prévue à la base de la plaque de fermeture présente une hauteur fixe, l'auvent venant de formation avec ladite plaque de fermeture. Une telle plaque de fermeture ne peut pas alors s'adapter à plusieurs configurations de goulottes et en particulier ne peut pas s'adapter à différentes positions relatives des première et deuxième goulottes.

En effet, pour respecter les normes en vigueur en matière de sécurité des installations électriques, il est parfois nécessaire que la première goulotte, destinée à être fixée sur un support vertical, repose sur une rehausse de façon à être située à une certaine distance du sol.

Cela est le cas lorsque cette goulotte est destinée au cheminement de conducteurs électriques présentant une âme conductrice entourée d'une seule gaine isolante.

Par contre, lorsque cette première goulotte est destinée au cheminement de câbles électriques présentant une double isolation, celle-ci peut être positionnée sans rehausse près du sol.

Ainsi, dans une installation électrique, les goulottes verticale et horizontale adjacentes peuvent présenter deux positions relatives différentes, une position dite "rapprochée" lorsque la goulotte verticale ne repose pas sur une rehausse, et une position dite "éloignée" lorsqu'on utilise une rehausse.

Actuellement, pour chacune des positions relatives explicitées ci-dessus, il est nécessaire de prévoir un accessoire de dérivation spécifique pour établir la jonction entre lesdites goulottes verticale et horizontale.

L'utilisation de deux accessoires de dérivation différents représente un certain coût dans la mise en oeuvre d'une installation électrique.

Le document EP-A-0 776078 décrit un accessoire de dérivation correspondant à l'art antérieur.

Afin de remédier à l'inconvénient précité, la présente invention propose un nouvel accessoire de dérivation tel que défini en introduction, dans lequel l'ouverture de communication prévue à la base de la plaque de fermeture est délimitée latéralement par des pattes comportant chacune au moins une portion sécable de sorte que ladite ouverture de communication présente une hauteur adaptable à la position relative des première et deuxième goulottes, et dans lequel il est prévu un accessoire de liaison rapporté sur ladite plaque de fermeture pour fermer ladite ouverture de communication vis-à-vis de l'extérieur et comportant un auvent apte à recouvrir localement le couvercle de fermeture de la deuxième goulotte.

Ainsi, en sectionnant une ou plusieurs portions sécables desdites pattes délimitant latéralement l'ouverture de communication de la plaque de fermeture de l'accessoire de dérivation selon l'invention, on peut adapter la hauteur de cette ouverture de communication à la position relative des deux goulottes verticale et horizontale, et en particulier on peut ajuster la hauteur de cette ouverture de manière que la section de passage entre lesdites goulottes reste constante, qu'on utilise ou non une rehausse pour la pose de la première goulotte.

Grâce à l'invention, il n'est plus alors nécessaire de prévoir des accessoires de dérivation spécifiques pour des positions relatives différentes des goulottes verticale et horizontale, mais un seul suffit adapté à la demande par l'installateur.

Selon une caractéristique particulièrement avantageuse de l'accessoire de dérivation selon l'invention, ladite ouverture de communication de la plaque de fermeture présente un bord supérieur horizontal pourvu à ses deux extrémités de deux glissières verticales pour le montage à coulissement de l'accessoire de liaison.

Ainsi, on peut avantageusement utiliser le même accessoire de liaison pour différentes hauteurs d'ouverture de communication de la plaque de fermeture, et celui-ci peut être monté en aveugle par coulissement sur les deux glissières verticales de ladite plaque de fermeture, de sorte qu'il est toujours bien positionné en regard de ladite ouverture de communication pour la fermer correctement.

Ces deux glissières verticales facilitent le montage de l'accessoire de liaison sur la plaque de fermeture, ce qui permet de gagner du temps d'installation pour l'installateur.

Selon une autre caractéristique avantageuse de l'accessoire de dérivation selon l'invention, il est prévu, sur le bord supérieur horizontal de l'ouverture de communication de la plaque de fermeture, un rebord horizontal assurant une jonction entre les deux glissières verticales et formant un support pour l'accessoire de liaison.

D'autres caractéristiques non limitatives et avantageuses de l'accessoire de dérivation conforme à l'invention sont les suivantes :
- chaque patte délimitant latéralement ladite ouverture de communication de la plaque de fermeture comprend une pluralité de portions sécables ;
- la plaque de fermeture comprend sur sa face arrière des moyens d'accrochage au socle de la première goulotte ;
- lesdits moyens d'accrochage comprennent au moins un crochet disposé à proximité du bord supérieur de ladite plaque de fermeture, destiné à s'accrocher sur le socle de la première goulotte ;
- lesdits moyens d'accrochage comprennent un crochet sur la face arrière de chaque patte de ladite plaque de fermeture ;
- ladite plaque de fermeture présente, en partie supérieure, au moins une portion sécable, de sorte que sa hauteur est adaptable à la largeur de la première goulotte, chaque portion sécable portant, sur sa face arrière, à proximité d'une ligne d'amorce de rupture, des moyens d'accrochage au socle de ladite première goulotte. Lesdits moyens d'accrochage peuvent comprendre au moins un crochet orienté vers le haut ;
- la plaque de fermeture porte, sur sa face arrière, à cheval sur le bord supérieur de ladite ouverture de communication, une pluralité de parois verticales orientées à 90 degrés par rapport au plan de ladite face arrière et délimitant entre elles des conduits d'introduction de câbles ou conducteurs électriques isolés les uns des autres ;
- l'accessoire de liaison comprend, sur sa face arrière tournée vers ladite ouverture de communication, une pluralité de parois verticales orientées transversalement par rapport au plan de ladite ouverture et délimitant entre elles des conduits d'introduction de câbles ou conducteurs électriques isolés les uns des autres ;
- la plaque de fermeture présente des bords supérieur et inférieur qui recouvrent une partie des ailes latérales du socle de la première goulotte ;
- la plaque de fermeture présente des bords latéraux tombants ; et
- la plaque de fermeture et l'accessoire de liaison sont formés chacun d'une seule pièce par moulage d'une matière plastique.

La description qui va suivre en regard des dessins annexés, donnés à titre d'exemples non limitatifs, fera bien comprendre en quoi consiste l'invention et comment elle peut être réalisée.

Sur les dessins annexés :
- les figures 1 et 2 sont des vues arrière et avant d'une plaque de fermeture d'un premier mode de réalisation de l'accessoire de dérivation selon l'invention ;
- la figure 3 est une vue en perspective de trois quarts du premier mode de réalisation de l'accessoire de dérivation selon l'invention mis en place à la jonction de deux goulottes, la première goulotte étant positionnée sur une rehausse ;
- la figure 4 est une vue en perspective de trois quarts de l'accessoire de dérivation représenté sur la figure 3 mis en place à la jonction de deux goulottes, la première goulotte n'étant pas positionnée sur une rehausse ;
- la figure 5 est une vue en perspective de trois quarts de l'accessoire de dérivation représenté sur les figures 3 et 4, dont la plaque de fermeture a été adaptée à une petite largeur de goulotte positionnée sans rehausse à proximité du sol ;
- les figures 6 et 7 sont des vues avant et arrière d'un deuxième mode de réalisation de l'accessoire de dérivation selon l'invention ;
- la figure 8 est une vue avant d'un troisième mode de réalisation de l'accessoire de dérivation selon l'invention mis en place sur une première goulotte positionnée sur une rehausse ;
- la figure 9 est une vue avant de la plaque de fermeture de l'accessoire de dérivation représenté sur la figure 8 ; et
- la figure 10 est une vue arrière de la plaque de fermeture représentée sur la figure 9.

En préliminaire on notera que, d'une figure à l'autre, les éléments identiques ou similaires des différents modes de réalisation de l'invention seront, dans la mesure du possible, référencés par les mêmes signes de référence et ne seront pas décrits à chaque fois.

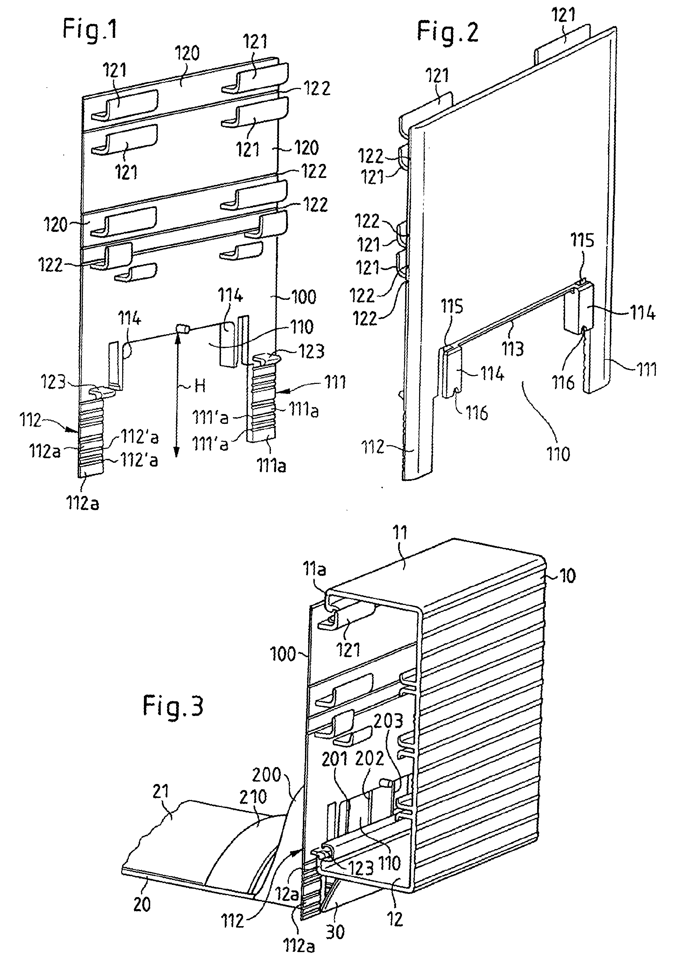

Sur les figures 1 et 2, on a représenté une plaque de fermeture 100 d'un premier mode de réalisation d'un accessoire de dérivation destiné à établir la jonction entre deux goulottes 10, 20 (voir figures 3 à 5), la première goulotte 10 étant fixée sur un support vertical et la deuxième goulotte 20 reposant sur un support horizontal.

Ici, la première goulotte 10 peut être une plinthe ou une moulure et la seconde goulotte 20 est un passage de plancher.

Selon ce premier mode de réalisation, la plaque de fermeture 100 présente une forme générale rectangulaire à bord droit et est pourvue à sa base d'une ouverture de communication 110 entre les espaces intérieurs desdites goulottes 10 et 20 (voir figures 3 à 5).

Selon une caractéristique avantageuse de la plaque de fermeture 100 représentée sur les figures 1 et 2, l'ouverture de communication 110 est délimitée par un bord horizontal supérieur et latéralement par des pattes 111, 112 comportant une pluralité de portions sécables 111a, 112a séparées les unes des autres par des lignes d'amorce de rupture 111'a, 112'a, de sorte que ladite ouverture de communication 110 présente une hauteur variable H adaptable à la position relative des première et deuxième goulottes 10, 20.

En outre, sur le bord supérieur horizontal de l'ouverture de communication 110 de la plaque de fermeture 100, il est prévu, sur la face avant de celle-ci, un rebord horizontal 113 pourvu à ses deux extrémités de deux glissières verticales 115 pour le montage à coulissement d'un accessoire de liaison 200 apte à être rapporté sur ladite plaque de fermeture 100 pour fermer ladite ouverture de communication 110. Cet accessoire de liaison comporte un auvent 210 apte à recouvrir localement le couvercle de fermeture 21 de la deuxième goulotte 20.

L'accessoire de liaison 200 fait partie de l'accessoire de dérivation selon l'invention décrit et représenté sur les figures.

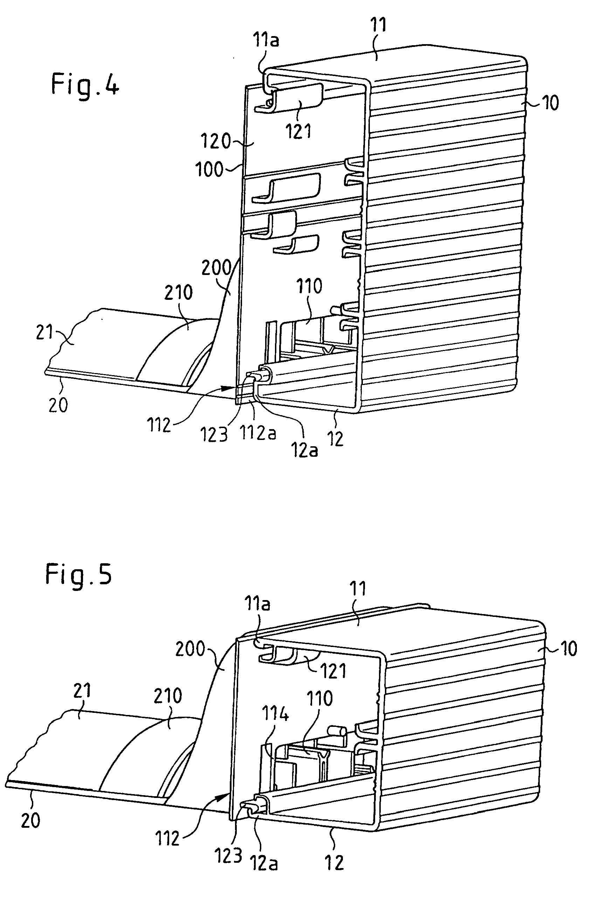

Les glissières verticales 115 sont formées dans des plots 114 qui s'étendent verticalement à partir du rebord horizontal 113, ces plots 114 présentant, à leur extrémité libre, des encoches 116 dans lesquelles sont aptes à s'engager les extrémités supérieures de nervures verticales prévues à proximité des bords d'extrémité libre du socle du passage de plancher 20, lorsque ladite ouverture de communication 110 présente une hauteur H minimum (voir plus particulièrement la figure 5).

Ainsi, pour une goulotte verticale 10 de faible largeur, comme cela est représenté sur la figure 5, et en l'absence de rehausse, lesdites nervures portées par le socle du passage de plancher 20 n'interfèrent pas avec les extrémités des plots 114 dans lesquels sont formées les glissières verticales 115 de la plaque de fermeture.

Avantageusement, la plaque de fermeture 100 représentée sur les figures 1 et 2 comprend sur sa face arrière des moyens d'accrochage au socle de la première goulotte 10.

Ici, lesdits moyens d'accrochage comprennent, d'une part, deux crochets 121, orientés vers le haut, disposés à proximité du bord supérieur de la plaque de fermeture 100, et, d'autre part, en partie supérieure de chaque patte 111, 112, un crochet 123 orienté vers le bas.

Les crochets 121 sont destinés à coopérer élastiquement avec la paroi externe du retour 11a de l'aile latérale supérieure 11 du socle de la première goulotte 10. Les crochets 123 sont aptes à s'encliqueter dans une rainure formée dans le retour 12a de l'aile latérale inférieure 12 du socle de la première goulotte 10.

Selon l'exemple de réalisation représenté, la plaque de fermeture 100 présente, en partie supérieure, une pluralité de portions sécables 120 séparées les unes des autres par des lignes d'amorce de rupture 122, de sorte que sa hauteur peut être adaptée à la largeur de la première goulotte 10 sur laquelle elle est accrochée.

Chaque portion sécable 120 porte, sur sa face arrière, à proximité d'une ligne d'amorce de rupture 122, des moyens d'accrochage au socle de ladite première goulotte 10, ici deux crochets 121 espacés les uns des autres et orientés vers le haut pour s'accrocher sur le retour 11a d'une aile latérale supérieure 11 du socle de la goulotte 10, comme cela vient d'être expliqué précédemment.

Ainsi, en sectionnant une ou plusieurs portions sécables 120 de la plaque de fermeture 100, on peut adapter sa hauteur pour qu'elle ferme une petite largeur de goulotte, comme cela est représenté sur la figure 5, ou l'utiliser en pleine hauteur (voir figures 3 et 4), pour fermer une grande largeur de goulotte.

La plaque de fermeture 100 est avantageusement réalisée d'une seule pièce par moulage d'une matière plastique.

Selon l'exemple représenté sur les figures 1 à 5, l'accessoire de liaison 200 comporte un pavillon venant coiffer l'ouverture de communication 110 de la plaque de fermeture 100 et une partie s'étendant sensiblement horizontalement à partir de ce pavillon et formant un auvent 210 venant recouvrir une partie du couvercle de fermeture 21 du passage de plancher 20.

Cet accessoire de liaison 200 comprend, sur la face arrière de son auvent tournée vers ladite ouverture de communication 110, une pluralité de parois verticales 201, 202, 203 orientées transversalement par rapport au plan de ladite ouverture de communication 110 et délimitant entre elles des conduits d'introduction de câbles ou conducteurs électriques isolés les uns des autres.

En effet, il peut s'avérer nécessaire d'isoler les uns des autres des câbles ou conducteurs électriques transportant, d'une part, du courant fort, et, d'autre part, du courant faible. Ceci est réalisé grâce à l'utilisation des parois verticales 201, 202, 203 de l'accessoire de liaison 200.

Avantageusement, selon le mode de réalisation représenté sur les figures 1 à 5, quelle que soit la hauteur de l'ouverture de communication 110 de la plaque de fermeture 100, ou la hauteur de la plaque de fermeture 100, l'accessoire de liaison 200 reste identique et se place facilement en regard de ladite ouverture de communication 110 grâce à son montage à coulissement sur les glissières verticales 115 portées par la plaque de fermeture 100.

Dans un seul cas où la première goulotte 10 repose sur une rehausse (voir figure 3), le bord supérieur du pavillon de l'accessoire de liaison 200 repose sur le rebord horizontal 113 situé sur le bord supérieur de l'ouverture de communication 110, ce rebord 113 formant alors un support pour l'accessoire de liaison 200.

L'accessoire de liaison 200 est également avantageusement réalisé d'une seule pièce par moulage d'une matière plastique.

Sur les figures 3 et 4, on a représenté l'utilisation de ladite plaque de fermeture 100 associée à l'accessoire de liaison 200 de l'accessoire de dérivation, pour deux positions relatives différentes des goulottes 10 et 20.

Sur la figure 3, la première goulotte 10 est positionnée sur une rehausse (non représentée) de sorte qu'elle est située à une certaine hauteur du sol et donc du passage de plancher 20 disposé sur le sol.

Dans ce cas, l'ouverture de communication 110 de la plaque de fermeture présente une grande hauteur H, seule les portions sécables d'extrémité 111a, 112a des pattes latérales 111, 112 délimitant l'ouverture de communication 110 ont été sectionnées, de manière à maintenir une section de passage déterminée entre les espaces intérieurs de la première goulotte verticale 10 positionnée sur la rehausse et du passage de plancher 20.

En outre, comme le montre la figure 3, il est prévu un cache 30 positionné en dessous de la première goulotte verticale 10, pour fermer la partie de l'ouverture de communication 110 de la plaque de fermeture 100 non utilisée.

Dans le cas représenté sur la figure 4, la première goulotte 10 identique à celle représentée sur la figure 3, n'est pas positionnée sur une rehausse. Elle présente alors une aile latérale inférieure 12 s'étendant à proximité du sol.

Dans ce cas, la hauteur H de l'ouverture de communication 110 de la plaque de fermeture est réduite en sectionnant une pluralité de portions sécables 111a, 112a desdites pattes latérales 111, 112, de sorte que la section de passage entre les espaces intérieurs des première et seconde goulottes est quasiment identique à celle prévue dans la configuration représentée sur la figure 3.

Enfin, sur la figure 5, on a représenté l'utilisation de la plaque de fermeture 100 de l'accessoire de dérivation représenté sur les figures 1 et 2 pour une première goulotte 10 de faible largeur positionnée à proximité du sol, c'est-à-dire sans utilisation d'une rehausse.

Dans ce cas, d'une part, les portions sécables 112a, 111a des pattes latérales 111, 112 délimitant ladite ouverture de communication 110 ont été sectionnées afin de réduire au minimum la hauteur de l'ouverture de communication 110 et maintenir une section de passage entre les espaces intérieurs desdites goulottes, quasiment identique à celle des figures 3 et 4, et, d'autre part, les portions sécables 120 de la plaque de fermeture 100 ont été également sectionnées pour adapter sa hauteur à la petite largeur de goulotte.

Comme nous l'avons dit précédemment, dans ce cas, avantageusement, les encoches 116, prévues à l'extrémité des plots 114 dans lesquels sont formées les glissières verticales 115 de montage de l'accessoire de liaison 200, forment des dégagements pour les extrémités libres de nervures verticales portées par le socle du passage de plancher 20 à proximité de ses bords longitudinaux d'extrémité.

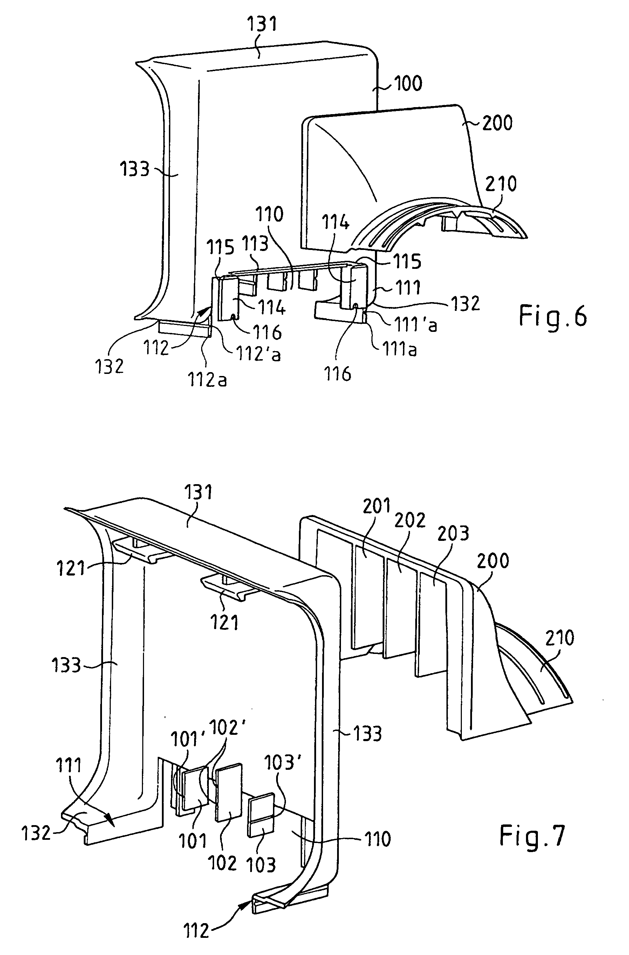

Sur les figures 6 et 7, on a représenté un deuxième mode de réalisation de l'accessoire de dérivation selon l'invention, selon lequel la plaque de fermeture 100 comprend des bords supérieur et inférieur 131, 132 aptes à recouvrir une partie des ailes latérales du socle de la première goulotte 10.

Une telle plaque de fermeture 100 est avantageusement utilisée pour des plinthes à couvercle enveloppant ou recouvrant (non représenté) de forme arrondie ou bombée.

La plaque de fermeture 100 présente également des bords latéraux tombants 132 destinés à s'adapter à la forme externe du couvercle enveloppant de la plinthe.

Cette plaque de fermeture 100 comporte, en tant que moyens d'accrochage sur le socle de la première goulotte, deux crochets 121 positionnés à proximité de son bord supérieur 131 et orientés vers le bas de façon à s'accrocher sur des retours ou bourrelets externes prévus sur l'aile latérale du socle de la goulotte.

Dans ce cas, comme le montre plus particulièrement la figure 6, les pattes latérales 111, 112 délimitant ladite ouverture de communication 110 comportent des portions sécables 112a, 111a s'étendant en dessous du bord inférieur enveloppant 132 de la plaque de fermeture 100.

En outre, ladite plaque de fermeture 100 porte, ici, sur sa face arrière, à cheval sur le bord supérieur de l'ouverture de communication 110, une pluralité de parois verticales (ici au nombre de trois) 101, 102, 103, orientées à 90 degrés par rapport au plan de ladite face arrière et délimitant entre elles des conduits d'introduction de câbles ou conducteurs électriques isolés les uns des autres.

Ces parois verticales 101, 102, 103 sont destinées à venir en correspondance avec les parois verticales 201, 202, 203 de l'accessoire de liaison 200 venant fermer l'ouverture de communication 110, pour prolonger les conduits d'introduction isolés des câbles ou conducteurs électriques.

Lesdites parois verticales 101, 102, 103 portées par ladite plaque de fermeture présentent elles aussi des hauteurs adaptables à la hauteur de l'ouverture de communication 110. Elles sont formées à cet effet d'au moins deux portions sécables séparées par des lignes d'amorce de rupture 101', 102', 103'.

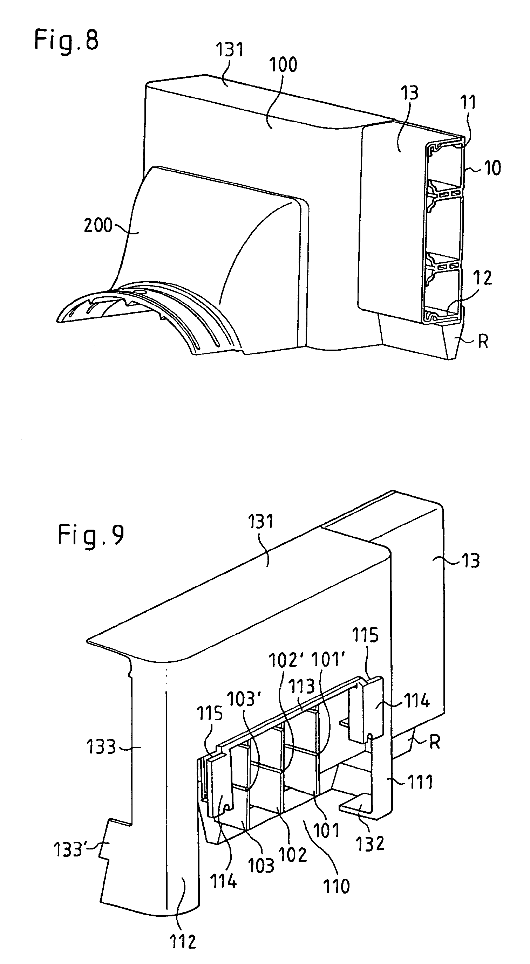

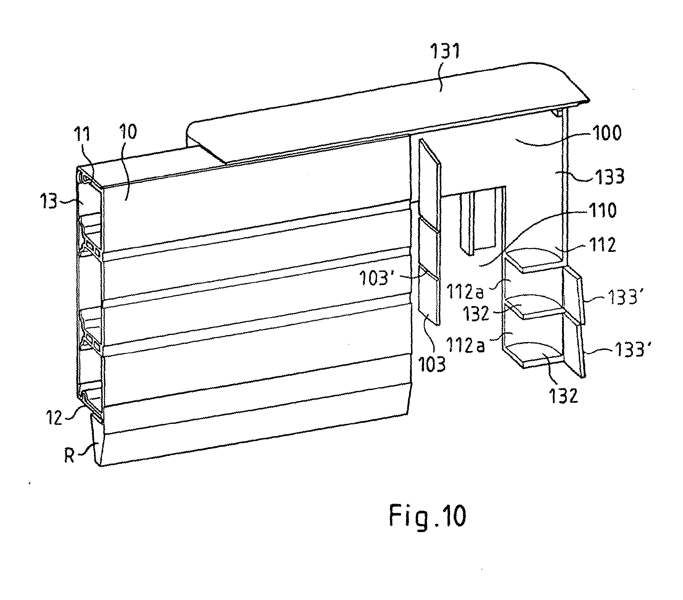

Sur les figures 8 à 10, on a représenté un troisième mode de réalisation de l'accessoire de dérivation selon l'invention, selon lequel la plaque de fermeture 100 présente des bords supérieur 131 et inférieur 132 recouvrant les ailes latérales 11, 12 d'une moulure 10, cette plaque de fermeture étant plus particulièrement adaptée à une moulure 10 qui forme, avec son couvercle 13, un parallélépipède rectangle.

Les pattes 111, 112 délimitant latéralement ladite ouverture de communication 110 de la plaque de fermeture 100 comprennent aussi des portions sécables 111a, 112a délimitées entre elles par des languettes 132 formant le bord inférieur de la plaque de fermeture 100 et servant d'amorce de rupture desdites portions.

La plaque de fermeture 100 comprend également des bords latéraux tombants 133 formant des retours droits dont une partie 133' est sectionnable avec lesdites pattes latérales 111, 112.

Enfin, tout comme le deuxième mode de réalisation, ici la plaque de fermeture 100 porte, sur sa face arrière, à cheval sur le bord supérieur de l'ouverture de communication 110, une pluralité de parois verticales 101, 102, 103, espacées les unes des autres, orientées à 90 degrés par rapport au plan de ladite ouverture et délimitant entre elles des conduits d'introduction de câbles ou conducteurs électriques isolés les uns des autres.

Ici aussi, ces parois verticales 101, 102, 103 sont formées de portions sécables séparées par des lignes d'amorce de rupture 101', 102', 103' pour permettre d'adapter leur hauteur à celle de l'ouverture de communication 110.

Bien entendu, les plaques de fermeture et accessoires de liaison des deuxième et troisième modes de réalisation représentés sur les figures 6 à 10 sont chacun avantageusement réalisés d'une seule pièce par moulage d'une matière plastique.

## Revendications

1. Accessoire de dérivation apte à établir la jonction entre deux goulottes (10, 20), la première (10) étant fixée sur un support vertical et la deuxième (20) reposant sur un support horizontal, cet accessoire comprenant une plaque de fermeture (100) de la première goulotte (10), pourvue à sa base d'une ouverture de communication (110) entre les espaces intérieurs desdites goulottes, **caractérisé en ce que** ladite ouverture de communication (110) est délimitée latéralement par des pattes (111, 112) comportant chacune au moins une portion sécable (111a, 112a) de sorte que ladite ouverture de communication présente une hauteur (H) adaptable à la position relative des première et deuxième goulottes (10, 20), et **en ce qu'**il est prévu un accessoire de liaison (200) rapporté sur ladite plaque de fermeture (100) pour fermer ladite ouverture de communication (110) vis-à-vis de l'extérieur et comportant un auvent (210) apte à recouvrir localement le couvercle de fermeture (21) de la deuxième goulotte (20).

2. Accessoire selon la revendication 1, **caractérisé en ce que** ladite ouverture de communication (110) de la plaque de fermeture (100) présente un bord supérieur horizontal pourvu à ses deux extrémités de deux glissières verticales (115) pour le montage à coulissement de l'accessoire de liaison (200).

3. Accessoire selon la revendication 2, **caractérisé en ce qu'**il est prévu, sur le bord supérieur horizontal de l'ouverture de communication (110) de la plaque de fermeture (100), un rebord horizontal (113) assurant une jonction entre les deux glissières verticales (115) et formant un support pour l'accessoire de liaison (200).

4. Accessoire selon l'une des revendications 1 à 3, **caractérisé en ce que** chaque patte (111, 112) délimitant latéralement ladite ouverture de communication (110) de la plaque de fermeture (100) comprend une pluralité de portions sécables (111 a, 112a).

5. Accessoire selon l'une des revendications 1 à 4, **caractérisé en ce que** la plaque de fermeture (100) comprend sur sa face arrière des moyens d'accrochage au socle de la première goulotte.

6. Accessoire selon la revendication 5, **caractérisé en ce que** lesdits moyens d'accrochage comprennent au moins un crochet (121) disposé à proximité du bord supérieur de ladite plaque de fermeture, destiné à s'accrocher sur le socle de la première goulotte.

7. Accessoire selon l'une des revendications 5 ou 6, **caractérisé en ce que** lesdits moyens d'accrochage comprennent un crochet (123) sur la face arrière de chaque patte (111, 112) de ladite plaque de fermeture (100).

8. Accessoire selon l'une des revendications précédentes, **caractérisé en ce que** ladite plaque de fermeture (100) présente, en partie supérieure, au moins une portion sécable (120), de sorte que sa hauteur est adaptable à la largeur de la première goulotte, chaque portion sécable (120) portant, sur sa face arrière, à proximité d'une ligne d'amorce de rupture (122), des moyens d'accrochage au socle de ladite première goulotte.

9. Accessoire selon la revendication 8, **caractérisé en ce que** lesdits moyens d'accrochage comprennent au moins un crochet (121) orienté vers le haut.

10. Accessoire selon l'une des revendications précédentes, **caractérisé en ce que** la plaque de fermeture (100) porte, sur sa face arrière, à cheval sur le bord supérieur de ladite ouverture de communication, une pluralité de parois verticales (101, 102, 103) orientées à 90 degrés par rapport au plan de ladite face arrière et délimitant entre elles des conduits d'introduction de câbles ou conducteurs électriques isolés les uns des autres.

11. Accessoire selon l'une des revendications précédentes, **caractérisé en ce que** l'accessoire de liaison (200) comprend, sur une face arrière tournée vers ladite ouverture de communication, une pluralité de parois verticales (201, 202, 203) orientées transversalement par rapport au plan de ladite ouverture et délimitant entre elles des conduits d'introduction de câbles ou conducteurs électriques isolés les uns des autres.

12. Accessoire selon l'une des revendications précédentes, **caractérisé en ce que** la plaque de fermeture (100) présente des bords supérieur (131) et inférieur (132) qui recouvrent une partie des ailes latérales du socle de la première goulotte.

13. Accessoire selon la revendication 12, **caractérisé en ce que** la plaque de fermeture présente des bords latéraux tombants (133).

14. Accessoire selon l'une des revendications précédentes, **caractérisé en ce que** la plaque de fermeture (100) et l'accessoire de liaison (200) sont formés chacun d'une seule pièce par moulage d'une matière plastique.

## Claims

1. Branch connection accessory for establishing a connection between first trunking (10) which is fixed to a vertical support and second trunking (20) which rests on a horizontal support, said accessory including a closure plate (100) for closing the first trunking (10) provided at its base with a communication opening (110) to establish communication between the respective interior spaces of said first trunking and said second trunking, **characterized in that** said communication opening (110) is delimited laterally by legs (111, 112) each having at least one removable portion (111a, 112a) so that the height (H) of said communication opening can be adapted to the relative position of the first trunking (10) and the second trunking (20), and **in that** a connection accessory (200) is attached to said closure plate (100) to close said communication opening (110) from the outside and includes a canopy (210) adapted to cover locally a closure cover section (21) of the second trunking (20).

2. Accessory according to claim 1, **characterised in that** said communication opening (110) of the closure plate (100) has a horizontal top edge with two vertical slideways (115) at its ends for slidably mounting the connection accessory (200).

3. Accessory according to claim 2, **characterized in that** it has a horizontal rim (113) on the horizontal top edge of the communication opening (100) of the closure plate (100) to provide a connection between the two vertical slideways (115) and form a support for the connection accessory (200).

4. Accessory according to any of claims 1 to 3, **characterised in that** each leg (111), (112) delimiting laterally said communication opening (110) of the closure plate (100) includes a plurality of removable portions (111a, 112a).

5. Accessory according to any of claime 1 to 4, **characterised in that** the closure plate (100) has attachment means on its rear face for attaching it to a base section of the first trunking.

6. Accessory according to claim 5, **characterised in that** said attachment means include at least one hook (121) near the top edge of said closure plate which hooks onto the base section of the first trunking.

7. Accessory according to claim 5 or 6, **characterised in that** said attachment means include a hook (123) on the rear face of each leg (111, 112) of said closure plate (100).

8. Accessory according to any preceding claim, **characterised in that** said closure plate (100) has in its upper part at least one removable portion (120) so that its height can be adapted to suit the width of the first trunking and the removable portion (120) or each removable portion (120) has on its rear face near a line of weakness (122) attachment means for attaching it to a base section of said first trunking.

9. Accessory according to claim 8, **characterised in that** said attachment means include at least one upwardly-oriented hook (121).

10. Accessory according to any preceding claim, **characterised in that** the closure plate (100) has a plurality of vertical walls (101, 102, 103) on its rear face spanning the top edge of said communication opening, oriented at 90 degrees to the plane of said rear face and delimiting between them ducts into which mutually-isolated electrical conductors or cables are inserted.

11. Accessory according to any preceding claim, **characterised in that** the connection accessory (200) has a plurality of vertical walls (201, 202, 203) on a rear face facing toward said communication opening, oriented transversely to the plane of said opening and delimiting between them ducts into which mutually-isolated electrical conductors or cables are inserted.

12. Accessory according to any preceding claim, **characterised in that** the closure plate (100) has top (131) and bottom (132) edges that cover part of lateral flanges of a base section of the first trunking.

13. Accessory according to claim 12, **characterised in that** the closure plate has upstanding lateral edges (133).

14. Accessory according to any preceding claim, **characterised in that** the closure plate (100) and the connection accessory (200) are each moulded in one piece from plastics material.

## Patentansprüche

1. Abzweigungszubehör, das die Verbindung zwischen zwei Kabelkanälen (10, 20) herzustellen vermag, wobei der erste (10) auf einem senkrechten Träger befestigt ist und der zweite (20) auf einem waagerechten Träger aufliegt, wobei das Zubehör eine Platte (100) zum Verschließen des ersten Kabelkanals (10) umfasst, die an ihrer Basis mit einer Verbindungsöffnung (110) zwischen den Innenräumen der Kabelkanäle versehen ist,
**dadurch gekennzeichnet, dass** die Verbindungsöffnung (110) seitlich durch Arme (111, 112) begrenzt ist, die jeweils wenigstens einen abtrennbaren Abschnitt (111a, 112a) aufweisen, so dass die Verbindungsöffnung eine Höhe (H) aufweist, die an die Winkellage des ersten und des zweiten Kabelkanals (10, 20) anpassbar ist, und dass ein Verbindungszubehör (200) vorgesehen ist, das auf der Verschlussplatte (100) zum Verschließen der Verbindungsöffnung (110) nach außen aufgesetzt ist und eine Abdeckung (210) aufweist, die lokal den Verschlussdeckel (21) des zweiten Kabelkanals (20) abzudecken vermag.

2. Zubehör nach Anspruch 1,
**dadurch gekennzeichnet, dass** die Verbindungsöffnung (110) der Verschlussplatte (100) einen waagerechten oberen Rand aufweist, der an seinen beiden Enden mit zwei senkrechten Gleitschienen (115) zur gleitenden Montage des Verbindungszubehörs (200) versehen ist.

3. Zubehör nach Anspruch 2,
**dadurch gekennzeichnet, dass** an dem waagerechten oberen Rand der Verbindungsöffnung (110) der Verschlussplatte (100) eine waagerechte Kante (113) vorgesehen ist, die eine Verbindung zwischen den beiden senkrechten Gleitschienen (115) herstellt und eine Abstützung für das Verbindungszubehör (200) bildet.

4. Zubehör nach einem der Ansprüche 1 bis 3,
**dadurch gekennzeichnet, dass** jeder Arm (111, 112), der seitlich die Verbindungsöffnung (110) der Verschlussplatte (100) begrenzt, eine Vielzahl abtrennbarer Abschnitte (111a, 112a) aufweist.

5. Zubehör nach einem der Ansprüche 1 bis 4,
**dadurch gekennzeichnet, dass** die Verschlussplatte (100) an ihrer Rückseite Mittel zum Einhaken am Sockel des ersten Kabelkanals aufweist.

6. Zubehör nach Anspruch 5,
**dadurch gekennzeichnet, dass** die Einhakmittel wenigstens einen in der Nähe des oberen Rands der Verschlussplatte angeordneten Haken (121) aufweisen, der dazu bestimmt ist, sich am Sockel des ersten Kabelkanals einzuhaken.

7. Zubehör nach einem der Ansprüche 5 oder 6,
**dadurch gekennzeichnet, dass** die Einhakmittel einen Haken (123) an der Rückseite eines jeden Arms (111, 112) der Verschlussplatte (100) aufweisen.

8. Zubehör nach einem der vorhergehenden Ansprüche,
**dadurch gekennzeichnet, dass** die Verschlussplatte (100) im oberen Teil wenigstens einen abtrennbaren Abschnitt (120) aufweist, so dass die Höhe an die Breite des ersten Kabelkanals anpassbar ist, wobei jeder abtrennbare Abschnitt (120) an seiner Rückseite in der Nähe einer Bruchlinie (122) Mittel zum Einhaken am Sockel des ersten Kabelkanals aufweist.

9. Zubehör nach Anspruch 8,
**dadurch gekennzeichnet, dass** die Einhakmittel wenigstens einen nach oben gerichteten Haken (121) aufweisen.

10. Zubehör nach einem der vorhergehenden Ansprüche,
**dadurch gekennzeichnet, dass** die Verschlussplatte (100) auf ihrer Rückseite am oberen Rand der Verbindungsöffnung aufsitzend eine Vielzahl senkrechter Wände (101, 102, 103) aufweist, die in einem Winkel von 90 Grad zur Ebene der Rückseite ausgerichtet sind und zwischen sich Kanäle zum Einführen von Kabeln oder gegeneinander isolierten elektrischen Leitern begrenzen.

11. Zubehör nach einem der vorhergehenden Ansprüche,
**dadurch gekennzeichnet, dass** das Verbindungszubehör (200) auf einer zur Verbindungsöffnung gewandten Rückseite eine Vielzahl senkrechter Wände (201, 202, 203) aufweist, die bezüglich der Ebene dieser Öffnung quer ausgerichtet sind und zwischen sich Kanäle zum Einführen von Kabeln oder gegeneinander isolierten elektrischen Leitern begrenzen.

12. Zubehör nach einem der vorhergehenden Ansprüche,
**dadurch gekennzeichnet, dass** die Verschlussplatte (100) einen oberen (131) und einen unteren (132) Rand aufweist, die einen Teil der seitlichen Schenkel des Sockels des ersten Kabelkanals bedecken.

13. Zubehör nach Anspruch 12,
**dadurch gekennzeichnet, dass** die Verschlussplatte gebördelte Seitenränder (133) aufweist.

14. Zubehör nach einem der vorhergehenden Ansprüche,
**dadurch gekennzeichnet, dass** die Verschlussplatte (100) und das Verbindungszubehör (200) jeweils aus einem Stück durch Formgießen eines Kunststoffs gebildet sind.
